(19) Europäisches Patentamt
European Patent Office
Office européen des brevets

(11) **EP 2 248 386 B1**

(12) **FASCICULE DE BREVET EUROPEEN**

(45) Date de publication et mention de la délivrance du brevet:
**15.08.2018 Bulletin 2018/33**

(21) Numéro de dépôt: **09705780.6**

(22) Date de dépôt: **30.01.2009**

(51) Int Cl.:
**H04W 74/00** *(2009.01)*    *H04W 74/02* *(2009.01)*
**H04W 74/08** *(2009.01)*

(86) Numéro de dépôt international:
**PCT/FR2009/050142**

(87) Numéro de publication internationale:
**WO 2009/095628 (06.08.2009 Gazette 2009/32)**

(54) **PROCÉDÉ ET DISPOSITIF DE RÉGULATION D'ÉMISSION DANS UN RÉSEAU DE TÉLÉCOMMUNICATION SANS FIL**

VERFAHREN UND VORRICHTUNG ZUR ZUGANGSKONTROLLE IN EINEM DRAHTLOSEN TELEKOMMUNIKATIONSNETZ

METHOD AND DEVICE FOR REGULATING SENDING IN A WIRELESS TELECOMMUNICATION NETWORK

(84) Etats contractants désignés:
**AT BE BG CH CY CZ DE DK EE ES FI FR GB GR HR HU IE IS IT LI LT LU LV MC MK MT NL NO PL PT RO SE SI SK TR**

(30) Priorité: **01.02.2008 FR 0850654**

(43) Date de publication de la demande:
**10.11.2010 Bulletin 2010/45**

(73) Titulaire: **Orange**
**75015 Paris (FR)**

(72) Inventeurs:
• **BROWN, Patrick**
**F-06800 Cagnes Sur Mer (FR)**
• **GALTIER, Jérôme**
**F-06000 Nice (FR)**

(56) Documents cités:
EP-A2- 0 994 604      WO-A-2007/051946
US-A1- 2002 154 653     US-A1- 2007 165 665

• JEROME GALTIER: "Analysis and optimization of MAC with constant size congestion window for WLAN" SYSTEMS AND NETWORKS COMMUNICATIONS, 2007. ICSNC 2007. SECOND INTERNAT IONAL CONFERENCE ON, IEEE, PI, 1 août 2007 (2007-08-01), pages 25-25, XP031133060 ISBN: 978-0-7695-2938-7 cité dans la demande
• ZAKHIA G ABICHAR AND J MORRIS CHANG: "CONTI: Constant-Time Contention Resolution for WLAN Access" INTERNET CITATION, [Online] XP002392550 Extrait de l'Internet: URL:http://www.springerlink.com/media/dlte umlulp4y0qqunm13/contributions/ l/p/0/d/lp0df7lkxhc1t688.pdf> [extrait le 2006-07-28] cité dans la demande
• ABICHAR Z ET AL: "Group-Based Medium Access for Next-GenerationWireless LANs" WORLD OF WIRELESS, MOBILE AND MULTIMEDIA NETWORKS, 2006. WOWMOM 2006. INTERNATIONAL SYMPOSIUM ON A BUFFALO-NIAGARA FALLS, NY, USA 26-29 JUNE 2006, PISCATAWAY, NJ, USA,IEEE, 26 juin 2006 (2006-06-26), pages 35-41, XP010925847 ISBN: 978-0-7695-2593-8
• SIWARUK SIWAMOGSATHAM ED - ANONYMOUS: "A novel smart-DCF scheme for high-speed WLANs" COMMUNICATIONS AND INFORMATION TECHNOLOGIES, 2007. ISCIT '07. INT ERNATIONAL SYMPOSIUM ON, IEEE, PI, 1 octobre 2007 (2007-10-01), pages 1032-1037, XP031166613 ISBN: 978-1-4244-0976-1

EP 2 248 386 B1

**Description**

La présente invention concerne le domaine des réseaux de télécommunication sans fil, en particulier des réseaux locaux sans fil ou WLAN (de l'anglais "Wireless Local Access Network") conformes à la famille de normes IEEE 802.11.

De tels réseaux sont également nommés réseaux Wi-Fi. Ils sont utilisés pour mettre en réseau, dans de nombreuses applications, des stations (par exemple des ordinateurs, des assistants personnels et des périphériques).

La norme 802.11 définit dans le document "IEEE 802.11a-1999, IEEE 802.11b-1999, IEEE-802.11d-2001, Part 11 : wireless LAN medium access control (MAC) and physical layer (PHY) spécifications" un procédé de régulation du trafic dans le réseau sans fil. Ce procédé utilise un système de fenêtres de congestion (Congestion Window"CW") pour réguler ce trafic. Selon cette norme, pour déterminer l'instant où émettre un paquet de données, une station tire un nombre aléatoire au hasard entre 0 et CW-1, la valeur CW étant un entier compris entre deux valeurs $CW_{min}$ et $CW_{max}$ spécifiées par la norme 802.11.

Cette valeur CW sert de compteur à rebours pour l'émission du paquet, ce compteur étant différé si la station constate qu'une autre station est en train d'émettre. Malheureusement, ce système à fenêtres de congestion génère un nombre important de collisions sur le réseau sans fil, ce qui se traduit, du point de vue de l'utilisateur, par une perte importante de bande passante.

Le document de l'auteur J. Galtier, intitulé "Analysis and optimization of MAC with constant size congestion window for WLAN" décrit un protocole de gestion de conflits pour l'accès de stations à la couche MAC d'un réseau WLAN. Ce procédé est basé sur un découpage du temps en intervalles correspondant à des tours de sélection. Un autre mécanisme connu sous le nom de "méthode des tournois" est susceptible d'être utilisé par les différentes stations pour réguler les émissions de paquets et limiter le taux de collision. Cette méthode des tournois est décrite dans le document des auteurs Z. Abichar et M. Chang, intitulé " CONTI: Constant Time Contention Resolution for WLAN Access", IFIP Networking 2005.

La méthode des tournois consiste à organiser une sorte de tournoi entre les stations ayant à émettre un paquet. Un tournoi est composé d'un certain nombre de tours de sélection, exécuté chacun pendant un intervalle de temps de durée prédéfinie permettant à chaque station d'avoir le temps d'entendre l'émission de toute autre. Cette durée peut typiquement être égale à la durée de l'intervalle de temps nommé "SlotTime" qui, selon le standard IEEE 802.11, est définie comme intervalle élémentaire dans la procédure de résolution de contention par fenêtre de congestion. Au début du tournoi, toutes les stations ayant à émettre un paquet sont susceptibles d'être autorisées à émettre ce paquet. A chaque tour de sélection, une ou plusieurs stations sont susceptibles d'être supprimées de la liste des stations autorisées à émettre, selon qu'une autorisation ou une interdiction d'émettre leur est attribuée lors de ce tour de sélection. A l'issue du tournoi, seules les stations non éliminées sont autorisées à émettre. Si plusieurs stations restent en lice à l'issue du tournoi, elles émettent en même temps provoquant ainsi une collision et donc une réception perturbée avec impossibilité de recevoir correctement les paquets de données émis. Ces stations devront alors participer au tournoi suivant pour tenter d'émettre à nouveau ces paquets.

Dans le cas de l'émission de flux de données requérant un accès prioritaire au réseau ou une bande passante élevée, il apparaît le besoin de fournir une solution de régulation d'émission permettent de garantir un niveau de performance en termes de bande passante ou de débit ainsi qu'une qualité de service.

La solution actuelle, compatible avec la norme IEEE 802.11e, consiste à augmenter la probabilité qu'un flux prioritaire accède au medium radio avant les autres. Or cette solution simpliste ne permet pas de garantir qu'une station ayant à émettre un flux prioritaire accède au medium radio en un temps prédéfini, ni qu'elle dispose d'une bande passante suffisante. En outre, cette solution ne permet pas de garantir un niveau de performances minimum aux autres stations ayant à émettre des flux moins prioritaires, puisqu'aucune mesure n'est prise pour ces autres stations.

Il n'existe donc pas de mécanisme de partage équitable de l'accès au réseau entre différentes stations utilisatrices qui soient utilisables avec le mode d'accès selon la norme 802.11e ou le mode d'accès selon la méthode des tournois.

Un des buts de l'invention est de remédier à des insuffisances et inconvénients de l'état de la technique et/ou d'y apporter des améliorations. L'invention est définie par les revendications indépendantes 1, 7, 8 et 9. Le procédé selon l'invention prend en compte la classe d'appartenance d'un paquet pour déterminer comment allouer les autorisations ou interdictions d'émettre au cours d'un tournoi, tout en conservant, par usage d'une valeur d'index affectée aléatoirement, un mécanisme statistique d'affectation de ces autorisations et interdictions d'émettre.

Il est ainsi possible de contrôler classe par classe la probabilité qu'une station émette un paquet. En particulier, il est possible de favoriser une classe de paquet par rapport à une autre et donc de mettre en place une méthode de gestion de priorités entre classes. De cette manière, le procédé peut être adapté pour chaque classe de paquet selon le besoin propre à une classe.

Selon un mode de réalisation, ladite valeur d'index est déterminée par tirage d'une valeur d'une variable aléatoire prenant ses valeurs dans un intervalle de valeurs d'index commun à toutes les classes de paquet. Un mécanisme simple de tirage d'une valeur aléatoire permet de déterminer une valeur d'index à partir de laquelle est déterminé le comportement de la station au cours d'un tournoi, c'est-à-dire les différentes valeurs binaires représentatives d'autorisations ou d'interdictions d'émettre.

Selon un mode de réalisation, le procédé selon l'invention comprend une étape d'identification, parmi une liste de sous-intervalles de valeurs associée à ladite classe de paquets, d'un sous-intervalle de valeurs dans lequel se trouve ladite valeur d'index et à partir duquel la ou les valeurs binaires sont déterminées. Ceci repose sur la constatation faite par les inventeurs que la probabilité qu'une station émette à l'issue du tournoi peut être représentée par une valeur d'index unique prenant ses valeurs dans un intervalle de valeurs donné, et qu'à un sous-intervalle de cet intervalle peut donc être associé un comportement au cours d'un tournoi. La liste de sous-intervalle est par exemple définie en tant que partition en sous-intervalles d'un intervalle de valeurs d'index dans lequel s'effectue l'attribution des valeurs d'index.

Selon un mode de réalisation, un niveau de priorité est affecté pour une période de temps donné à ladite classe de paquets, la liste de sous-intervalles de valeurs associée à ladite classe étant fonction du niveau de priorité couramment affecté à ladite classe. Le procédé selon l'invention est compatible avec différentes méthodes de gestion de priorité visant à attribuer à une classe donnée un niveau de priorité variable au cours du temps.

D'autres buts, caractéristiques et avantages de l'invention apparaîtront à travers la description qui va suivre, donnée uniquement à titre d'exemple non limitatif, et faite par référence aux dessins annexés dans lesquels :

- la figure 1 représente un réseau de télécommunication sans fil avec des stations conformes à l'invention dans un mode préféré de réalisation ;
- la figure 2 représente un dispositif de régulation d'émission conforme à l'invention dans un mode préféré de réalisation ;
- la figure 3 représente, sous forme d'organigramme, les principales étapes d'un procédé de régulation d'émission connu dans l'état de la technique ;
- la figure 4 représente, sous forme d'organigramme, les principales étapes d'un procédé de régulation d'émission conforme à l'invention dans un mode préféré de réalisation ;
- la figure 5, représente un premier arbre de probabilités illustrant la mise en oeuvre d'un procédé de régulation d'émission connu dans l'état de la technique; et
- la figure 6 représente un premier arbre de probabilités illustrant la mise en oeuvre d'un procédé de régulation d'émission selon l'invention.

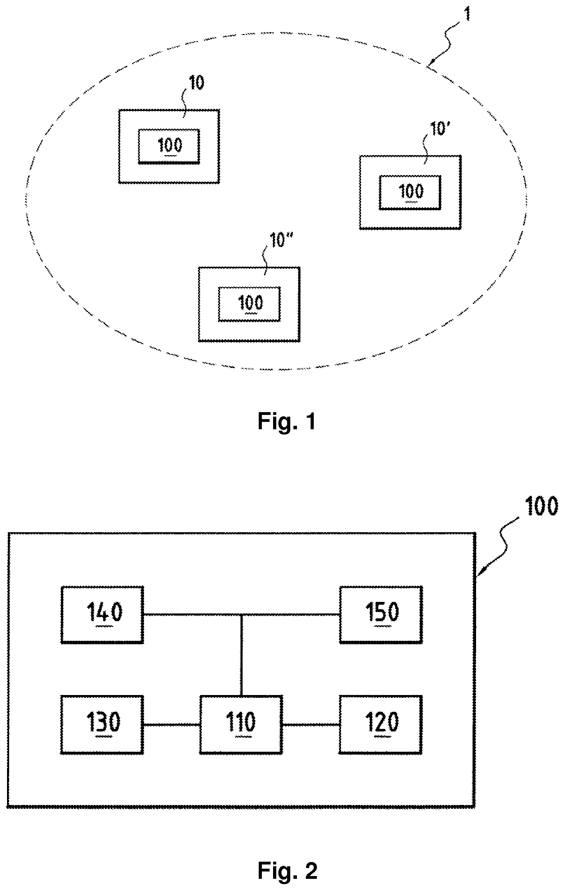

La **figure 1** représente un réseau 1 de télécommunication sans fil dans lequel évoluent des stations 10, 10', 10" conformes à l'invention. Chacune de ces stations 10 comporte un dispositif 100 de régulation d'émission conforme à l'invention.

Dans le mode illustré à la **figure 2,** le dispositif 100 selon l'invention comporte un processeur 110, une mémoire vive 120, une mémoire morte de type ROM 130, un module 140 d'accès au réseau 1, pour émettre et recevoir des paquets et des signaux dans le réseau de télécommunication sans fil 1 et une table de probabilités 150. Ces différents éléments sont reliés entre eux par un système de bus non référencé. Les moyens 140 pour envoyer et recevoir des paquets de données et des signaux sur le réseau de télécommunication sans fil 1 sont, dans l'exemple décrit ici, constitués par une carte d'accès au réseau 1 conforme à la famille de normes IEEE 802.11.

Pour la mise en oeuvre de l'invention, il est fait usage de la méthode des tournois citée en introduction.

Dans la méthode des tournois, telle que décrite par CONTI dans le document référencé ci-dessus, les autorisations ou interdictions d'émettre sont attribuées aux stations en utilisant des variables aléatoires binaires ayant une loi de distribution de Bernoulli. Cette loi de distribution est définie par une probabilité de tirage d'une autorisation d'émettre. Une telle probabilité est ainsi affectée à chaque station et à chaque tour de sélection. Les probabilités sont choisies de préférence de manière à ce que statistiquement le taux de collision soit le plus faible possible. Une procédure pour choisir les probabilités de façon optimale est présentée dans le document "Analysis and optimization of mac with constant size congestion window for WLAN", par J. Galtier, Proceedings on the Third International Conference on Services and Networks communications", INRIA, Library of Congress Number 2007930108, August 2007.

Selon un mode de réalisation particulier, décrit dans le document de brevet WO2007/051946, les probabilités affectées aux différentes stations lors d'un tour de sélection peuvent être fonction des autorisations ou interdictions d'émettre tirées aux tours de sélection précédents, de manière à minimiser le taux de collision.

Les stations 10, 10', 10" comportent chacune un module de gestion d'émission qui permet la mise en oeuvre d'un procédé de régulation d'émission.

Dans la suite de la description les notations suivantes seront utilisées:

- $k$ est l'indice identifiant le tour de sélection au cours d'un tournoi;
- $k_{max}$ est le nombre maximal de tours de sélection pour un tournoi;
- $r$ est une variable aléatoire binaire;

- r(k) est la valeur de la variable aléatoire binaire r tirée au tour de sélection d'indice k; r(k) appartient à l'ensemble {0,1}, la valeur "1" étant représentative usuellement d'une autorisation d'émettre, tandis que la valeur "0" est représentative d'une interdiction d'émettre.

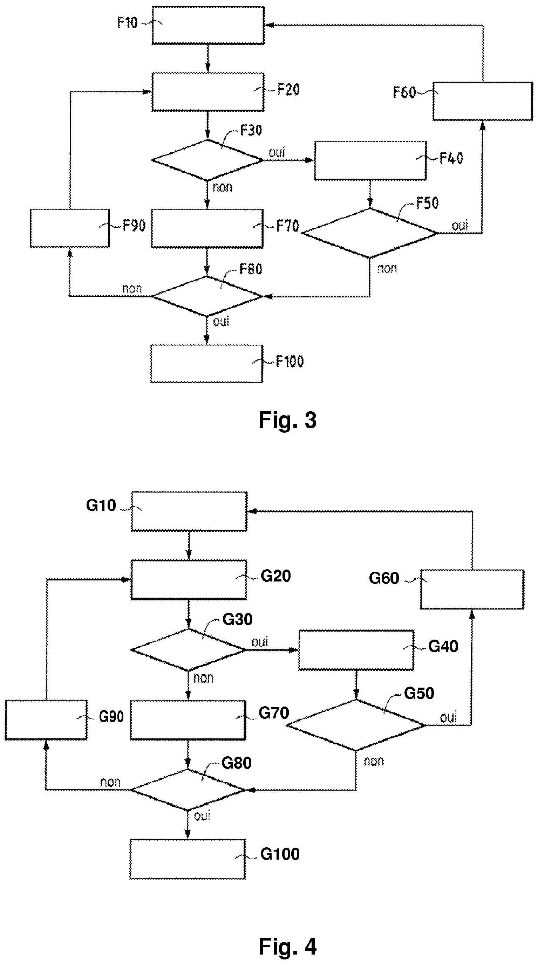

Les principales étapes **F10 à F100** d'un procédé de régulation d'émission selon la méthode connue des tournois sont décrites en référence à la **figure 3.** Ce procédé est mis en oeuvre par le module de gestion d'émission d'une station 10 ayant un paquet de données à émettre à travers le réseau 1. Toutes les stations ayant un paquet de données à émettre, mettent en oeuvre simultanément ce même procédé, sans qu'une concertation ou interrogation mutuelle, autre que ce qui est décrit dans les étapes décrites ci-dessous, soit nécessaire entre ces stations.

Le procédé est décrit pour une station 10. Il correspond à ce qu'on appelle un tournoi: il est répété par chaque station tant qu'elle a des paquets à émettre. Les stations ayant des paquets à émettre démarrent toutes au même instant la procédure de résolution de contention par mise en oeuvre d'un tournoi, cet instant étant fonction d'un critère analogue à celui utilisé pour le système de fenêtre de congestion selon le standard IEEE 802.11, c'es-à-dire après une période de temps DIFS1 prédéfinie (qui peut être différente de la période de temps DIFS (DCF Inter Frame Space) définie dans la norme 802.11)

Au cours d'une première étape **F10,** la station 10 initialise une variable k à la valeur 1, cette variable représentant l'indice du tour de sélection courant.

Cette étape F10 d'initialisation est suivie par une étape **F20** de tirage d'une valeur r(k) d'une variable aléatoire binaire r, associée à la station pour le tour de sélection courant d'indice k. La probabilité pour que cette variable aléatoire binaire r(k) prenne, au tour de sélection d'indice k, la valeur prédéterminée « 1 » est notée p(k). - Selon un mode de réalisation, cette probabilité p(k) dépend des valeurs tirées aux tours de sélection précédents. La probabilité pour que cette variable aléatoire binaire r(k) prenne, au tour k, la valeur prédéterminée « 0 » est donc (1-p(k)).

Cette étape F20 de tirage d'une valeur de variable aléatoire est suivie par une étape **F30** au cours de laquelle on vérifie si la valeur binaire r(k) tirée est égale à "0".

Si tel est le cas (cas d'une interdiction d'émettre), ce test F30 est suivi par une étape **F40** au cours de laquelle la station 10 écoute le réseau de télécommunication sans fil pour déterminer si une autre station 10', 10" a émis un signal indiquant que cette autre station 10', 10" désire émettre un paquet de données.

Si un tel signal est détecté (résultat du test de l'étape **F50** positif), le procédé se termine par l'étape **F60,** sans que la station 10 ait émis son paquet de données. Au cours de cette étape F60, la station 10 attend la fin des tours de sélection et l'émission éventuelle d'un paquet par une autre station 10', 10" avant d'exécuter à nouveau l'étape F10 d'initialisation déjà décrite.

En revanche, si à l'étape F40 aucun signal n'est détecté (résultat du test de l'étape **F50** négatif), ce test est suivi par un test à l'étape **F80** au cours duquel on détermine si le tour k est le dernier tour de sélection, ce qui revient à vérifier si la variable k est égale à la valeur $k_{max}$. Si tel est le cas, la station 100 émet son paquet de données au cours d'une étape F100.

En revanche, si k est strictement inférieur à $k_{max}$, le résultat du test de l'étape F80 est négatif. Cette étape est alors suivie par une étape **F90** au cours de laquelle on incrémente la valeur de la variable k d'une unité, en vue de l'exécution du tour de sélection suivant.

Si au cours du test de l'étape **F30,** il est déterminé que la valeur binaire tirée est égale à la valeur prédéterminée 1 (cas d'une autorisation d'émettre), ce test F30 est suivi par une étape **F70** d'émission d'un signal indiquant que la station 100 désire émettre un paquet de données sur le réseau.

Cette étape F70 d'émission d'un signal est suivie par l'étape **F80** déjà décrite au cours de laquelle on vérifie si le tour de sélection courant k est le dernier tour de sélection. Si tel est le cas, ce test F80 est suivi par l'étape **F100** d'émission du paquet de données par la station 10. En revanche, si tel n'est pas le cas, ce test F80 est suivi par l'étape **F90** d'incrémentation déjà décrite.

L'étape **F90** d'incrémentation est suivie par une nouvelle exécution des étapes F20 à F80 déjà décrites, pour le tour de sélection suivant et selon la logique d'enchaînement des étapes qui vient d'être décrite.

Le procédé et le dispositif selon l'invention sont maintenant décrits plus en détail. Comme déjà évoqué en introduction de la présente demande, l'invention fait appel à la notion de classe de paquets. La notion de classe de paquets utilisée dans ce document est à interpréter au sens large.

A titre d'exemple, la norme IEEE 802.11 définit huit classes de paquet nommées respectivement "Control" (paquets de contrôle), "Voice" (paquets appartenant à un flux transmettant de la voix), "Audio" (paquets appartenant à un flux audio), "Class 1", "Class 2", "Class 3", "Class 4" et "Best Effort". Une classe de cette norme correspond à une catégorie de flux ayant des besoins spécifiques en termes de qualité de service: une bande passante minimale, un taux d'erreur de transmission faible, etc.

D'autres manières de définir des classes de paquet sont également envisageables. Ces classes peuvent notamment être définies en fonction tout paramètre caractéristique du paquet ou du flux auquel appartient ce paquet: par exemple en fonction de la taille du paquet, en fonction du niveau de priorité du paquet, en fonction de la durée du flux de communication auquel appartient le paquet, en fonction de la provenance ou de la destination du paquet, etc.

L'invention est applicable à tout système de classification de paquet, pourvu que la classe d'appartenance d'un paquet puisse être déterminée ou obtenue d'une manière ou d'une autre par la station ayant ce paquet à émettre. L'invention permet de traiter de manière différenciée les différentes classes définies, en garantissant pour chacune de ces classes une qualité de service en termes de bande passante et d'équité de traitement.

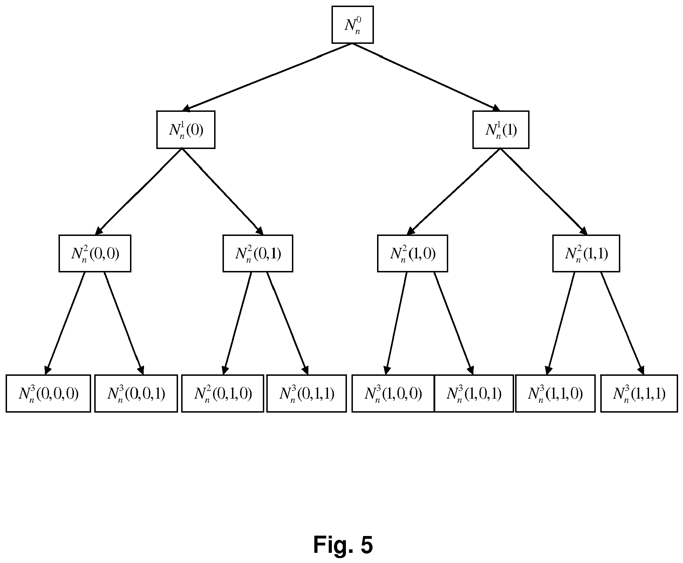

La **figure 5** illustre une situation simplifiée dans laquelle toutes les stations ont à émettre des paquets appartenant à une même classe de paquets notée n, ces paquets devant être traités avec le même niveau de priorité.

Le mécanisme d'élimination progressif des stations est illustré sur cette figure par un graphe de transition entre états sous forme d'arbre. Dans cet arbre, un noeud représente un état possible, un lien entre deux noeuds indiquant une transition possible entre ces deux états. L'arbre représente la succession possible des états d'une station lors d'un tournoi. Un noeud sans fils ou noeud terminal est appelé noeud feuille.

Au début du tournoi, une station ayant un paquet à émettre, se trouve dans l'état initial représenté par le noeud racine. Puis à chaque tour de sélection, selon la valeur 0 ou 1 tirée, la station se trouve dans un nouvel état, représenté par un noeud fils situé au niveau de profondeur suivant et relié au noeud précédent. Le nombre total de niveaux de profondeur de l'arbre est ainsi égal au nombre maximal $k_{max}$ de tours de sélection dans un même tournoi. Dans l'exemple donné à la figure 5, le nombre total de niveaux de profondeurs est $k_{max}=3$. Une station se trouvant dans l'état représenté par un noeud feuille, qui donc n'a pas été éliminée lors des précédents tours de sélection du tournoi, va émettre son paquet de données (étape 100).

A chaque noeud de l'arbre est associée une probabilité. L'arbre forme donc un arbre de probabilités. Le noeud racine de l'arbre est identifié par $N°$ : il correspond à l'état initial de la station au début du tournoi. A ce noeud racine $N^0$ est associée la probabilité $p_n^0$ de tirage de la valeur « 1 » pour la variable aléatoire binaire r au premier tour de sélection 1. Cette probabilité est la même pour toutes les stations ayant un paquet à émettre un paquet appartenant à la classe n.

En cas de tirage d'une valeur « 1 » au premier tour de sélection, la station se trouve dans un nouvel état représenté par le noeud identifié par $N^1(1)$. En cas de tirage d'une valeur « 0 » au premier tour de sélection, la station se trouve dans un nouvel état représenté par le noeud identifié par $N^1(0)$.

Au deuxième tour de sélection, lorsque la station est dans l'état représenté par le noeud identifié par $N^1(1)$, la probabilité de tirage de la valeur « 1 » est $p_n^1(1)$. De même, lorsque la station est dans l'état représenté par le noeud identifié par $N^1(0)$, la probabilité de tirage de la valeur « 1 » est $p_n^1(0)$.

En généralisant à un tour de sélection quelconque d'indice k, on note $p_n^k(r(1), ..., r(k))$ la probabilité, associée au noeud $N^k(r(1), ..., r(k))$ et à la classe n, de tirage de la valeur « 1 » pour la variable aléatoire binaire r au tour de sélection d'indice k+1, sachant que les valeurs r(1), ...r(k) ont successivement été tirées aux tours de sélection 1 à k.

On associe en outre à chaque noeud $N^k(r(1),..., r(k))$ une valeur binaire $E^k(r(1), ..., r(k))$ égale à 1 si le noeud $N^k(r(1), ..., r(k))$ est un noeud feuille et égale à 0 dans le cas contraire.

On définit une fonction $V_n^k$, associé à la classe n, affectant à un noeud $N^k(r(1), ..., r(k))$ une valeur réelle comprise dans l'intervalle [0,1]. Cette fonction $V_n^k$ est définie par récurrence :

pour k=0,

$$V_n^0 = 1$$

pour k=1,

$$V_n^1(1) = p_n^0(1)$$

où $p_n^0(1)$ est la probabilité associée au noeud $N^0(1)$,

$$V_n^1(0)= 1- p_n^0(1)$$

pour k>1,

$$V_n^k (r(1), ..., r(k-1), 1)= V_n^{k-1} (r(1), ..., r(k-1))\, p_n^{k-1} (r(1), ..., r(k-1))$$

$$V_n^k (r(1), ..., r(k-1), 0)= V_n^{k-1} (r(1), ..., r(k-1))(1- p_n^{k-1} (r(1), ..., r(k-1)))$$

$V_n^k (r(1), ..., r(k))$ représente également la probabilité qu'une station se trouve dans l'état représenté par le noeud $N^k$ (r(1), ..., r(k)) à l'issue de k tours de sélection.

A titre d'exemple, on suppose que les probabilités $p_n^k (r(1), ..., r(k))$ affectées aux noeuds représentés sur la figure 5 ont les valeurs suivantes indiquées en annexe dans le tableau 1. Dans cet exemple, les probabilités $V_n^k (r(1), ..., r(k))$ associées à ces mêmes noeuds ont les valeurs indiquées en annexe dans le tableau 2.

On définit par récurrence une relation d'ordre entre les noeuds d'un arbre:

- pour k=1, on décide que le noeud $N^1(0)$ est "inférieur" au noeud $N^1(1)$ et on écrit $N^1(0) < N^1(1)$;
- les noeuds fils des noeuds $N^1(0)$ et $N^1(1)$ héritent de la relation d'ordre définie pour les noeuds $N^1(0)$ et $N^1(1)$: tout noeud ayant $N^1(0)$ comme noeud parent dans l'arbre (c'est-à-dire tous les noeuds $N^k$ (r(1), ..., r(k)) tels que r(1)=0, pour $1 \le k \le k_{max}$) est inférieur à l'un quelconque des noeuds ayant $N^1(1)$ comme noeud parent (c'est-à-dire tous les noeuds $N^k$ (r(1), ..., r(k)) tels que r(1)=1, pour $1 \le k \le k_{max}$);
- pour k>1, $N^k$ (r(1), ..., r(k-1), 0) < $N^k$ (r(1), ..., r(k-1), 1)
- les noeuds fils des noeuds $N^k$ (r(1), ..., r(k-1), 0) et $N^k$ (r(1), ..., r(k-1), 1) héritant également de cette relation d'ordre.

De manière très intuitive, on comprend qu'une première station se trouvant dans l'état représenté par le noeud $N^1(1)$ gagnera le tournoi face à une deuxième station se trouvant dans l'état représenté par le noeud $N^1(0)$, puisque la deuxième station est éliminée après avoir tiré une valeur "0", du fait notamment que la première station a elle tirée une valeur "1" l'autorisant à rester en lice dans le tournoi. Il en est de même pour les noeuds rattachés au noeud $N^1(1)$ vis-à-vis des noeuds rattachés au noeud $N^1(0)$.

En généralisant cette constatation, la relation d'ordre telle que définie rend compte du fait qu'une première station se trouvant dans l'état représenté par un premier noeud N1 gagnera le tournoi face à une deuxième station se trouvant dans l'état représenté par un deuxième noeud N2 lorsque N1>N2. En d'autres termes, un noeud N1 de l'arbre est supérieur à un noeud N2, si le noeud N1 correspond à l'état d'une station ayant tiré la séquence r(1), ..., r(k) correspondante lui assurant d'émettre *avant* une station ayant tiré la séquence r'(1), ..., r'(k) correspondant au noeud N2.

Il est donc possible d'exploiter cette propriété pour garantir que les stations, ayant à émettre des paquets appartenant à une classe devant être traitée avec un niveau de priorité plus élevé que celui avec lequel sont traités les paquets appartenant à une autre classe, soient servies en priorité. Plus généralement, l'affectation de certaines parties de l'arbre à certaines classes permet de favoriser certaines classes par rapport à d'autres.

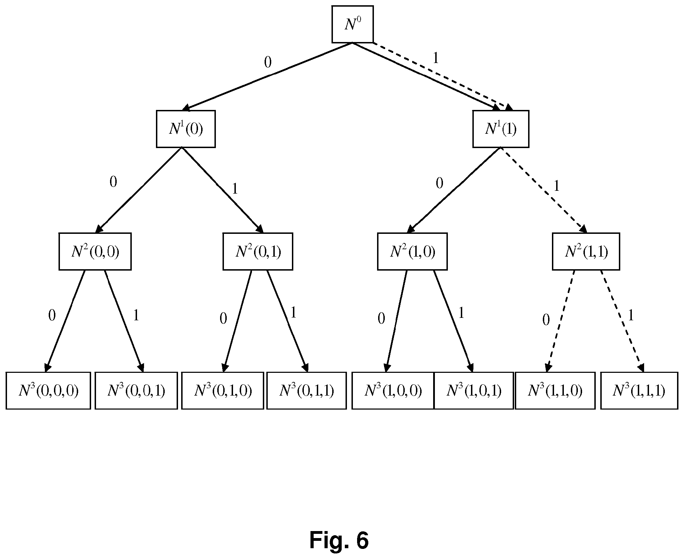

La figure 6 représente un exemple d'arbre illustrant un mécanisme d'élimination progressif des stations lorsque deux classes n1 et n2 sont possibles pour les paquets à émettre par ces stations. Dans ce cas, les probabilités de tirage associées à chaque noeud dépendent de la classe d'appartenance du paquet à émettre.

Dans la figure 6, les traits pleins représentent les transitions autorisées pour une station ayant à émettre un paquet de classe n1 et les traits tiretés, les transitions autorisées pour une station ayant à émettre un paquet de classe n2. $N^1(1)$

L'arbre formé par l'ensemble des noeuds $N^k$ (r(1), ..., r(k)) pour $0 \le k \le 3$, comprend ainsi deux parties:

- une première partie, associée à la classe n2, comprenant les noeuds $N^0$, $N^1(1)$, $N^2(1,1)$, $N^3(1,1,0)$ et $N^3(1,1,1)$;
- une deuxième partie, associée à la classe n1, comprenant les noeuds $N^0$, $N^1(0)$, $N^1(1)$, $N^2(0,0)$, $N^2(0,1)$, $N^2(1,0)$, $N^3(0,0,0)$, $N^3(0,0,1)$, $N^3(0,1,0)$, $N^3(0,1,1)$, $N^3(1,0,0)$, $N^3(1,0,1)$.

Les parties de l'arbre affectées à une classe donnée peuvent être déterminées simplement en affectant des probabilités différentes aux noeuds de cet arbre, notamment en interdisant, pour une station ayant à émettre un paquet appartenant à cette classe, au moyen de valeur de probabilités fixées à "1" (ou, respectivement à "0"), l'accès aux états correspondant à certaines parties de l'arbre.

Dans l'exemple décrit ici en référence à la figure 6, la valeur de la probabilité $p_{n2}^0$ associée au noeud racine $N^0$ dans le cas d'un paquet de classe n2 est égale à 1. En conséquence il n'y aura jamais de transition effectuée entre l'état représenté par le noeud racine $N^0$ et l'état suivant représenté par le noeud $N^1(0)$ pour une station ayant à émettre un paquet de classe n2. Pour indiquer ceci, il n'est pas indiqué de trait tireté sur la figure 6 entre le noeud racine $N^0$ et l'état suivant représenté par le noeud $N^1(0)$.

De même, la valeur de la probabilité $p_{n2}^1(1)$ associée au noeud $N^1(1)$ dans le cas d'un paquet de classe n2 est égale à 1. En conséquence il n'y aura jamais de transition effectuée entre l'état représenté par le noeud $N^1(1)$ et l'état suivant $N^2(1,0)$. Pour indiquer ceci, aucun trait tireté n'est dessiné sur la figure 6 entre le noeud $N^1(1)$ (1) et l'état suivant $N^2(1,0)$.

Symétriquement, du fait que la valeur de la probabilité $p_{n1}^1(1)$ associée au noeud $N^1(1)$ dans le cas d'un paquet de classe n1 est égale à 0, il n'y aura jamais de transition effectuée entre l'état représenté par le noeud $N^1(1)$ et l'état suivant $N^2(1,1)$. Pour indiquer ceci, aucun trait plein n'est dessiné sur la figure 6 entre noeud $N^1(1)$ et l'état suivant $N^2(1,1)$.

Au final, en partant de l'état représenté par le noeud $N^0$ de l'arbre, une station ayant à émettre un paquet de priorité n1 ne peut atteindre que les six états finaux représentés pas les noeuds $N^3(0,0,0)$, $N^3(0,0,1)$, $N^3(0,1,0)$, $N^3(0,1,1)$, $N^3(1,0,0)$, $N^3(1,0,1)$. De même, en partant de l'état représenté par le noeud racine $N^0$ de l'arbre, une station ayant à émettre un paquet de priorité n2 ne peut atteindre que les seuls deux états finaux représentés pas les noeuds $N^3(1,1,0)$, $N^3(1,1,1)$.

En conclusion, le choix des probabilités affectés aux différents noeuds permet de gérer différentes classes de paquets et de contrôler l'affectation des noeuds de l'arbre à ces différentes classes.

Il suffit alors d'imposer à une station, ayant à émettre un paquet de données appartenant à une classe à traiter en priorité, d'utiliser comme probabilités un ensemble de probabilités lui garantissant d'arriver dans les états représentés par les noeuds feuilles les plus à droite de l'arbre. Celle-ci gagnera le tournoi face à une autre station utilisant comme probabilité un ensemble de probabilités lui garantissant d'arriver dans les feuilles les plus à gauche de l'arbre.

L'invention propose en outre un mécanisme simple pour attribuer un jeu de valeurs r(1) à r(k) à une station ayant un paquet de donnée à émettre, en fonction de la classe à laquelle appartient ce paquet, les valeurs r(1) à r(k) étant déduites d'une valeur d'index A affectée à la station.

Ce mécanisme repose sur la constatation que le comportement d'une station dans le tournoi, c'est-à-dire la succession des états de cette station au cours du tournoi, peut être défini de manière univoque en identifiant un noeud feuille $N^k(r(1), ..., r(k))$ de l'arbre de probabilités, ce noeud feuille représentant l'état de la station à l'issue d'un tournoi, en supposant qu'elle effectue tous les tours de sélections de ce tournoi. En effet, l'identification d'un noeud feuille $N^k(r(1), ..., r(k))$ permet de déterminer les k valeurs r(1) à r(k) tirées permettant d'aboutir à l'état représenté par ce noeud feuille. Le comportement de la station est alors entièrement déterminé par la connaissance des valeurs r(1) à r(k).

Or, à chaque noeud feuille $N^k(r(1), ..., r(k))$ de l'arbre est associée la valeur de probabilité $V_n^k(r(1), ..., r(k))$ selon la définition de la fonction $V_n^k$ donnée ci-dessous, la somme des probabilités $V_n^k(r(1), ..., r(k_{max}))$ associées aux noeuds feuilles d'un arbre étant égale à 1.

Soit Z le nombre total de noeuds feuilles de l'arbre. On définit pour chaque classe de paquets n à traiter, une suite de Z+1 valeurs d'index $A_n^i$ appartenant à l'intervalle de valeurs réelles [0,1[ pour $0 \le i \le Z$, avec $A_n^0 = 0$ et $A_n^Z = 1$. On définit au moyen des valeurs d'index $A_n^i$, pour $0 \le i \le Z$, une partition de l'intervalle de valeurs réelles [0,1[ en Z sous-intervalles $[A_n^i, A_n^{i+1}[$ disjoints.

A chaque noeud feuille $N^k(r(1), ..., r(k))$ est associé, dans l'intervalle de valeurs réelles [0,1], un sous-intervalle $[A_n^i, A_n^{i+1}[$ de longueur égale à $V_n^k(r(1), ..., r(k))$, c'est-à-dire tel que $A_n^{i+1} = A_n^i + V_n^k(r(1), ..., r(k))$, les valeurs $V_n^k(r(1), ..., r(k))$ étant considérées dans l'ordre dans lequel les noeuds feuilles $N^k(r(1), ..., r(k))$ correspondant sont classés selon la relation d'ordre définie plus haut: le premier intervalle $[A_n^0, A_n^1[$ est associé au noeud feuille le plus petit au sens de cette relation d'ordre, le deuxième intervalle $[A_n^1, A_n^2[$ étant associé au deuxième noeud feuille le plus petit, et ainsi de suite, le dernier intervalle $[A_n^{Z-1}, A_n^Z[$ étant associé au dernier noeud feuille.

La gestion des classes de paquet s'effectue donc en associant à chaque classe de paquet n une partition de l'intervalle [0,1[ en Z sous-intervalles $[A_n^i, A_n^{i+1}[,$ puis en identifiant le sous-intervalle de valeurs dans lequel se trouve la valeur d'index A affectée à la station ayant un paquet à émettre, les valeurs binaires représentatives des autorisations / interdictions d'émettre étant ensuite déduites du sous-intervalle identifié.

Il est à noter que certains de ces sous-intervalles pouvant être de longueur nulle lorsqu'il existe des noeuds feuilles $N^k$ (r(1), ..., r(k)) tels que $V_n^k$ (r(1), ..., r(k))=0.

Dans l'exemple représenté à la figure 6, l'arbre comprend Z=8 noeuds feuilles. A la classe de paquets n2 sont associées les noeuds feuilles $N^3(1,1,0)$, $N^3(1,1,1)$, les autres noeuds feuilles n'étant pas accessibles.

Les valeurs d'index associées à la classe n2 sont:

$$A_{n2}^1 = A_{n2}^0 + V_{n2}^3 (0,0,0) = 0 \qquad \text{puisque } V_{n2}^3 (0,0,0)=0$$

$$A_{n2}^2 = A_n^1 + V_{n2}^3 (0,0,1) = 0 \qquad \text{puisque } V_{n2}^3 (0,0,1)=0$$

$$A_{n2}^3 = A_{n2}^2 + V_{n2}^3 (0,1,0) = 0 \qquad \text{puisque } V_{n2}^3 (0,1,0)=0$$

$$A_{n2}^4 = A_{n2}^3 + V_{n2}^3 (0,1,1) = 0 \qquad \text{puisque } V_{n2}^3 (0,1,1)=0$$

$$A_{n2}^5 = A_{n2}^4 + V_{n2}^3 (1,0,0) = 0 \qquad \text{puisque } V_{n2}^3 (1,0,0)=0$$

$$A_{n2}^6 = A_{n2}^5 + V_{n2}^3 (1,0,1) = 0 \qquad \text{puisque } V_{n2}^3 (1,0,1)=0$$

$$A_{n2}^7 = A_{n2}^6 + V_{n2}^3 (1,1,0) = 0,55$$

$$A_{n2}^8 = A_{n2}^7 + V_{n2}^3 (1,1,1) = 1$$

De même, à la classe de paquets n1 sont associées les noeuds feuilles $N^3(0,0,0)$, $N^3(0,0,1)$, $N^3 (0,1,0)$, $N^3(0,1,1)$, $N^3(1,0,0)$, $N^3(1,0,1)$, les autres noeuds feuilles n'étant pas accessibles.

Les valeurs d'index associées à la classe n1 sont:

$$A_{n2}^1 = A_{n2}^0 + V_{n1}^3 (0,0,0) = 0,40425$$

$$A_{n2}^2 = A_{n2}^1 + V_{n1}^3 (0,0,1) = 0,53900$$

$$A_{n2}^3 = A_{n2}^2 + V_{n1}^3 (0,1,0) = 0,83888$$

$$A_{n2}^4 = A_{n2}^3 + V_{n1}^3 (0,1,1) = 0,98000$$

$$A_{n2}^5 = A_{n2}^4 + V_{n1}^3(1,0,0) = 0,99220$$

$$A_{n2}^6 = A_{n2}^5 + V_{n1}^3(1,0,1) = 1$$

$$A_{n2}^7 = A_{n2}^6 + V_{n1}^3(1,1,0) = A_{n2}^6 = 1 \qquad \text{puisque } V_{n1}^3(1,1,0)=0$$

$$A_{n2}^8 = A_{n2}^7 + V_{n1}^3(1,1,1) = A_{n2}^7 = 1 \qquad \text{puisque } V_{n1}^3(1,1,1)=0$$

Une station, ayant à émettre un paquet de classe n1 à émettre, va déterminer une valeur d'index A par tirage d'une valeur d'une variable aléatoire uniforme prenant ses valeurs dans l'intervalle de valeurs [0, 1[. La station détermine dans quel sous-intervalle $[A_n^i, A_n^{i+1}[$ se trouve la valeur d'index tirée, par comparaison de A avec les différentes valeurs $A_n^i$, pour 0≤i≤Z. L'identification de l'intervalle $[A_n^i, A_n^{i+1}[$ permet de déterminer le noeud feuille $N_n^k(r(1), ..., r(k))$ associé à cet intervalle, à partir du numéro d'ordre i de l'intervalle associé. A partir l'identification du noeud feuille, il est possible d'en déduire la séquence des valeurs r(1) à r(k) du fait de la construction de l'arbre.

De manière pratique, afin de faciliter la détermination de ces différents éléments, lorsque l'arbre est construit et que les probabilités sont affectés aux différents noeuds, on calcule les valeurs $V_n^k(r(1), ..., r(k))$ et $A_n^i$, puis on mémorise dans une table pour chaque noeud feuille la séquence des valeurs r(1) à r(k) et l'intervalle de valeurs d'index associé.

Les principales étapes **G10 à G100** d'un procédé de régulation d'émission selon l'invention sont décrites en référence à la **figure 4**. Ce procédé utilise également la méthode des tournois, mais certaines des étapes F10 à F100 décrites précédemment sont modifiées. On suppose ici que la classe n affectée à un paquet est codée par une valeur entière comprise dans un intervalle de valeurs [N_min, N_max], par exemple [1, 8].

Au cours d'une première étape **G10,** la station 10 initialise une variable k à la valeur 1, cette variable représentant l'indice du tour de sélection courant.

Lors de cette même étape **G10,** chaque station ayant un paquet à émettre détermine une valeur d'index A représentative du comportement de la station au cours du tournoi. Plus précisément, cette valeur d'index A représente la probabilité que la station 10 soit autorisée à émettre un paquet à l'issue du tournoi.

Prenant en compte la classe n à laquelle appartient le paquet à émettre, la station détermine la suite des Z sous-intervalles $[A_n^i, A_n^{i+1}[$ associée à cette classe n. La station détermine ensuite dans quel sous-intervalle $[A_n^i, A_n^{i+1}[$ se trouve la valeur d'index tirée, puis la séquence des valeurs r(1) à r(k) qui lui sont attribuées pour le tournoi. Ces valeurs r(1) à r(k) sont enfin stockées en mémoire par la station.

La manière de déterminer les valeurs r(k) à partir d'une valeur d'index initiale unique A qui vient d'être décrite permet s'affranchir d'un tirage de valeur r(k) à chaque tour du tournoi, puisque celles-ci peuvent être déduites directement de la valeur d'index A tirée au départ, tout en garantissant que la répartition, entre les stations, des chances d'émettre soit la même que celle qui aurait été obtenue par tirage effectif de valeur basées sur les probabilités $p_n^k(r(1), ..., r(k))$ affectées aux différents noeuds $N^k(r(1), ..., r(k))$.

A l'étape G20, la station lit en mémoire la valeur r(k) associée au tour de sélection courant.

Les étapes G30 à G100 suivantes sont identiques aux étapes F30 à F100 précédemment décrites, à l'exception de l'étape G30 qui utilise, pour le test visant à déterminer quelle étape doit être exécutée après l'étape G30, la valeur r(k) obtenue par calcul à partir de la valeur d'index A tirée au départ, en remplacement de la valeur r(k) obtenue par tirage de valeur de variable aléatoire.

Selon une variante de réalisation, il est possible de choisir des profondeurs d'arbre différentes selon la partie d'arbre. Par exemple, la partie d'arbre affectée à la classe n1 pourrait comporter seulement deux niveaux de profondeur, ce qui reviendrait à supprimer de cet arbre les noeuds $N^3(0,0,0)$, $N^3(0,0,1)$, $N^3(0,1,0)$, $N^3(0,1,1)$, $N^3(1,0,0)$, $N^3(1,0,1)$. Le nombre de niveaux de profondeur de la partie de l'arbre affecté à une classe de paquet est ajusté en fonction des besoins en qualité de service propres à cette classe. Le nombre de niveaux de profondeur pourra être augmenté pour les classes pour lesquelles on souhaite réduire le taux de collision (et donc le taux d'erreur de transmission) ou réduit pour les classes pour lesquelles il est préférable d'émettre plus rapidement malgré le risque de collision. Le nombre maximal $k_{max}$ de niveaux de profondeur choisit pour l'arbre détermine la durée du tournoi, et donc la durée de l'intervalle de temps réservé à l'émission proprement dite.

En cas de niveaux de profondeurs variable, le test de l'étape G80 est remplacé par un test consistant à vérifier si le noeud représentant l'état courant de la station est un noeud feuille; Dans l'affirmative, c'est l'étape G100 qui est exécutée suite à l'étape G80 dans le cas contraire, c'est l'étape G90 qui sera exécutée.

L'invention permet en outre de mettre en oeuvre différentes méthodes d'ordonnancement des émissions de paquets en fonction de leurs classes respectives. En effet, en définissant de manière appropriée, pour chaque tournoi ou chaque phase de la méthode d'ordonnancement sélectionnée, d'une part, les intervalles de valeurs d'index et, d'autre part, l'association entre ces intervalles de valeurs d'index et les classes susceptibles d'être utilisées, il est possible de mettre en oeuvre une méthode d'ordonnancement particulière.

Selon une première méthode d'ordonnancement, dite méthode des priorités strictes, un premier paquet de données, appartenant à une classe n1, à traiter avec un niveau de priorité inférieur à celui avec lequel doit être traitée la classe n2 à laquelle appartient un deuxième paquet, est toujours émis après le deuxième paquet. En d'autres termes, une station ayant à émettre des paquets de classe n1 devra attendre que les stations ayant des paquets de classe n2 aient fini d'émettre ses paquets pour pouvoir émettre à son tour.

Dans une telle situation, une suite de sous-intervalles $[A_{n1}^i, A_{n1}^{i+1}[$, respectivement $[A_{n2}^i, A_{n2}^{i+1}[$ est affectée à la classe n1, respectivement n2, chacune de ces suites correspondant à une partition de l'intervalle [0, 1[. A la classe n2, associée au niveau de priorité le plus élevé, sont associées les noeuds feuilles de l'arbre les plus à droites (les noeuds feuilles les plus élevés au sens de la relation d'ordre définie ci-dessus). En outre les longueurs de certains des sous-intervalles $[A_{n1}^i, A_{n1}^{i+1}[$ sont choisies nulles de manière à interdire qu'une classe de paquet accède aux états représentés par les noeuds feuilles associés à ces intervalles de longueur nulle.

Les suites de sous-intervalles ainsi prédéfinies sont utilisées lors d'un tournoi par une station en fonction de la classe d'appartenance du paquet à émettre.

Selon une deuxième méthode d'ordonnancement, dite méthode d'ordonnancement circulaire, plus connue sous l'appellation anglo-saxonne de "Round Robin", une même fréquence d'accès au réseau est affectée à chacune des classes de paquet. Une telle méthode consiste, de manière connue, à effectuer, après chaque période d'émission - période qui correspond à un ou plusieurs tournois - , un roulement pour que le niveau de priorité traité en priorité change à chaque fois.

Supposons par exemple qu'il existe au total 3 classes de paquets n1, n2, n3. Lors du premier tournoi, la classe n1 est traitée en priorité par rapport à la classe n2, qui elle-même est traitée en priorité par rapport à la classe n3. Dans ce cas, on note n1 > n2 > n3. Au tournoi suivant, ce sera la classe n2 qui sera traitée en priorité par rapport à la classe n3, qui elle-même est traitée en priorité par rapport à la classe n1. On a donc n2 > n3 > n1. Lors du tournoi encore suivant, on aura, n3 > n1 > n2.

La méthode d'ordonnancement comprend donc trois phases différentes. Ces trois phases seront gérées de manières appropriée en définissant pour chacune d'elle un arbre de probabilités et en déterminant une suite de sous-intervalles $[A_n^i, A_n^{i+1}[$ pour chaque classe de paquet et chaque phase.

Selon une troisième méthode d'ordonnancement, dite méthode d'ordonnancement circulaire pondéré, plus connue sous l'appellation anglo-saxonne de "Weigted Round Robin" (WRR), la fréquence d'accès au réseau est différente selon les niveaux de priorité, en général plus élevé pour les flux de priorités élevées.

Supposons par exemple qu'il existe au total 3 classes de paquets n1, n2, n3. On utilisant les notations précédentes, il y aura par exemple 4 phases, notées comme suit:

n1 > n3 > n2

n2 > n3 > n1

n1 > n2 > n3

n3 > n2 > n1

Ces différentes phases seront gérées de manières appropriée en définissant pour chacune d'elle un arbre de probabilités et en déterminant une suite de sous-intervalles $[A_n^i, A_n^{i+1}[$ pour chaque classe de paquet et chaque phase, phase qui correspond à un ou plusieurs tournois. L'ordre de succession des phases peut être modifiée de manière dynamique, selon la classe de station ayant émis au tour précédent. Dans ce cas, la suite de sous-intervalles $[A_n^i, A_n^{i+1}[$ utilisée par une station lors d'un tournoi sera fonction de la classe de station ayant émis au tour précédent.

Le mécanisme de régulation d'émission proposé par l'invention est compatible avec la mise en oeuvre prévue dans la norme actuelle. En effet, il suffit de prévoir que certaines période DIFS (par exemple une période sur deux) il sera fait usage du mécanisme conforme à la norme IEEE 802.11 actuel, tandis que pour les autres périodes il sera fait usage du mécanisme selon l'invention. On peut ainsi garantir une cohabitation et un partage de l'accès au médium radio entre des stations conformes à la norme IEEE 802.11 et des stations utilisant le mécanisme selon l'invention, ces dernières bénéficiant des avantages en termes de partage de bande passante qui ont été décrits.

Il est possible de garantir qu'aucune station conforme à la norme IEEE 802.11 n'émette pendant qu'un tournoi a lieu entre les stations mettant en oeuvre l'invention en évitant que des périodes de silence de durée DIFS se produisent au cours du tournoi. Il suffit par exemple de supprimer tout noeud feuille $N^k(r(1), ..., r(k))$ pour lequel il existe au moins M valeurs consécutives r(i), r(i+1), ..., r(i+M) égales à zéro où M est égal à la durée de la période DIFS divisée par la durée d'un tour de sélection, la valeur de M étant arrondie à l'entier immédiatement supérieur. En outre, le tournoi débutera un peu avant la fin de la période DIFS et les stations, mettant en oeuvre l'invention, émettront un signal à travers le réseau afin d'éviter que les autres stations, non-conformes à l'invention, détectant une absence de signal, commencent à émettre.

L'invention apporte une solution simple et efficace de gestion de différents niveaux de priorité dans un réseau de télécommunication sans fil. Elle permet une prise en compte de différents niveaux de priorité et un partage équitable de l'accès au médium radio selon un mécanisme de répartition basé sur une méthode probabiliste qui prend en compte tous les niveaux de priorité des paquets à émettre. Le partage de l'accès au médium radio est effectué de manière optimale, statistiquement parlant, et ce quelle que soit la méthode d'ordonnancement choisie pour la gestion de différents niveaux de priorité, notamment la gestion de classe de paquets. Il est ainsi possible de garantir une qualité de service, et ce sans avoir à mettre en oeuvre une technique avec contrôle centralisé des émissions.

Selon un mode de réalisation particulier de l'invention, une méthode d'ordonnancement de type Round Robin est mise en oeuvre entre des stations ayant à émettre des paquets et appartenant à une même classe de paquets n.

Selon ce qui a été décrit plus haut, choisir une suite de valeur binaires r(j), j∈{1,...,k}, représentatives d'autorisation ou d'interdiction d'émettre pendant un tournoi pour une classe donnée n, est équivalent à tirer au hasard ces valeurs avec une probabilité $V_n^k(r(1), ..., r(k))$. Et ceci est équivalent à tirer une variable A au hasard dans l'intervalle [0,1[ et à d'associer à A la feuille de numéro i telle que l'intervalle $[A^i, A^{i+1}[$ contient A, les intervalles $[A^i, A^{i+1}[$ formant, comme déjà expliqué plus haut, une partition de l'intervalle [0,1[ associée à la classe de paquets considérée.

Dans ce mode de réalisation, la station 10 tire au hasard la valeur d'index A dans l'intervalle [0,1[ et conserve en mémoire la valeur A jusqu'à la fin du tournoi. A la fin du tournoi, un noeud feuille $N^k(r(1), ..., r(k))$ est atteint, à la suite de quoi la ou les stations ayant gagné le tournoi va ou vont émettre. Par écoute des signaux émis, la station 10 peut déterminer la suite des valeurs r(1),...,r(k) qui a permis d'atteindre le noeud feuille $N^k(r(1), ..., r(k))$ gagnant et est donc en mesure d'identifier ce noeud feuille gagnant correspondant.

Si le noeud feuille gagnant n'appartient pas à l'ensemble des noeuds feuilles que peut atteindre une station ayant à émettre un paquet de classe n, alors la station 10 utilisera pour le prochain tournoi la valeur d'index A qu'elle a en mémoire au lieu de tirer une nouvelle valeur d'index au hasard.

Si au contraire le noeud feuille gagnant appartient à l'ensemble des feuilles que peut atteindre la classe n, alors la station peut déterminer le numéro d'ordre i et donc l'intervalle $[A^i, A^{i+1}[$ qui est associé à ce noeud feuille gagnant. A la suite de quoi, la station 10, si le paquet qui a été émis n'est pas entré en collision, remplace dans sa mémoire la valeur A par une nouvelle valeur d'index A' calculée comme suit:

$$A'=A+1-A_i \text{ si } A< A_i$$

$$A'=A-A_i \text{ si } A\geq A_i.$$

Cette opération consiste à effectuer une permutation circulaire sur l'intervalle [0,1[ de longueur 1-$A_i$. C'est cette nouvelle valeur d'index A' mise à jour que la station 10 utilisera pour le prochain tournoi au lieu de tirer une valeur au hasard dans l'intervalle [0,1[. De cette manière, la valeur d'index affectée à une station lors du prochain tournoi est déduite de la valeur d'index affectée à cette même station lors du tournoi courant, et non pas tirée au sort comme celle affectée à la station lors du premier tournoi.

Si à la fin du tournoi une station 10 gagne le tournoi mais que son émission entre en collision avec l'émission d'une autre station, alors cette station 10 peut ne pas changer la valeur A qu'elle a en mémoire de la façon qui vient d'être indiquée. Elle peut dans ce cas par exemple tirer au hasard une nouvelle valeur d'index A' qu'elle stocke en mémoire. Si au contraire il y a eu collision, mais la station 10 n'a pas émis, elle peut soit - selon une première alternative - tirer une nouvelle valeur de A, soit - selon une deuxième alternative - mettre à jour la valeur d'index A comme si l'émission avait réussi.

Ce mode de réalisation permet aux stations d'émettre chacune à leur tour, les stations émettant à tour de rôle tournoi après tournoi, sauf en cas de collision lors d'un tournoi. Il est particulièrement approprié pour la transmission de flux de données véhiculant de la voix, parce qu'il une qualité de service pour les différentes stations d'une même classe en servant de manière équitable ces stations.

On peut remarquer que la permutation circulaire ainsi mise en oeuvre conserve l'ordre des grandeurs A en mémoire dans les stations émettant des paquets de classe n et qui n'ont pas émis au tour précédent. Une station ayant émis avec succès se retrouve avec la plus petite valeur en mémoire et choisira donc la feuille la plus petite lors du prochain tournoi. Ces deux dernières propriétés permettent de servir les stations souhaitant émettre un paquet de classe n en mode Round Robin tant qu'une collision ne se produit pas. Enfin une telle permutation circulaire ne modifie pas la répartition statistique des valeurs d'index A qui continuent à être distribuées uniformément sur [0,1[, ce qui garantit que les feuilles seront choisies avec des probabilités permettant de minimiser le taux de collision.

Cette méthode d'ordonnancement entre stations de type Round Robin est utilisable bien entendu également lorsqu'on est en présence d'une seule classe de paquet. Ce qui permet d'envisager de l'utiliser indépendamment de la gestion de classes décrite ci-dessus, puisque, dans ce cas, tous les paquets seront traités de la même manière, sans considération de leur classe d'appartenance.

Dans cette optique, l'invention concerne également un deuxième procédé de régulation d'émission mis en oeuvre par une station ayant au moins un paquet de données à émettre *via* un réseau de communication sans fil, le procédé comprenant,

- au moins une étape G20 d'obtention d'une valeur binaire représentative soit une autorisation d'émettre, soit d'une interdiction d'émettre,
- une étape G100 d'émission dudit paquet, ladite étape d'émission étant exécutée sous condition qu'au moins un critère relatif à la ou aux valeurs binaires obtenues soit vérifié,

procédé dans lequel la ou les valeurs binaires sont déduites d'une valeur d'index affectée à ladite station pour un tournoi comprenant l'exécution d'au moins une étape G20 d'obtention et de l'étape G100 d'émission,

la valeur d'index A' affectée à ladite station lors d'un tournoi suivant un tournoi courant étant déduite de la valeur d'index A affectée à ladite station lors du tournoi courant de sorte que les stations ayant à émettre un paquet émettent à tour de rôle.

Dans un tel procédé, seule la première valeur d'index affecté à une station est obtenue par tirage aléatoire d'une valeur dans un intervalle de valeurs prédéfini.

Selon un mode particulier de réalisation de ce deuxième procédé, lorsque, lors dudit tournoi courant une autre station a émis au moins un paquet sans qu'il y ait eu collision, la valeur d'index A' est déduite de ladite valeur d'index A comme suit:

$$A' = A + 1 - A_i \text{ si } A < A_i$$

$$A' = A - A_i \text{ si } A \geq A_i.$$

où l'intervalle $[A_i, A_{i+1}[$ est l'intervalle de valeurs d'index associé à cette autre station, ayant émis un paquet.

Un tel procédé de régulation permet donc de réguler l'accès au medium de transmission selon un méthode ordonnancement entre station de type de type Round Robin, tout en minimisant le taux de collision.

Corrélativement, l'invention concerne également un dispositif comprenant des moyens de mise en oeuvre de ce deuxième procédé, ainsi qu'un programme informatique pour la mise en oeuvre de ce deuxième procédé et un support d'enregistrement lisible par un processeur de données sur lequel est enregistré un tel programme.

ANNEXE

Tableau 1

| Noeud | Probabilité | Valeur |
|---|---|---|
| $N^0$ | $p_n^0$ | 0,02 |
| $N^1(0)$ | $p_n^1(0)$ | 0,45 |
| $N^1(1)$ | $p_n^1(1)$ | 0,50 |
| $N^2(0,0)$ | $p_n^2(0,0)$ | 0,25 |
| $N^2(0,1)$ | $p_n^2(0,1)$ | 0,32 |
| $N^2(1,0)$ | $p_n^2(1,0)$ | 0,39 |
| $N^2(1,1)$ | $p_n^2(1,1)$ | 0,45 |

Tableau 2

| Noeud | Probabilité | Valeur |
|---|---|---|
| $N^0$ | $V_n^0$ | 1 |
| $N^1(0)$ | $V_n^1(0)$ | 0,98 |
| $N^1(1)$ | $V_n^1(1)$ | 0,02 |
| $N^2(0,0)$ | $V_n^2(0,0)$ | 0,539 |
| $N^2(0,1)$ | $V_n^2(0,1)$ | 0,441 |
| $N^2(1,0)$ | $V_n^2(1,0)$ | 0,010 |
| $N^2(1,1)$ | $V_n^2(1,1)$ | 0,010 |
| $N^3(0,0,0)$ | $V_n^3(0,0,0)$ | 0,40425 |
| $N^3(0,0,1)$ | $V_n^3(0,0,1)$ | 0,13475 |
| $N^3(0,1,0)$ | $V_n^3(0,1,0)$ | 0,29988 |
| $N^3(0,1,1)$ | $V_n^3(0,1,1)$ | 0.14112 |
| $N_n^3(1,0,0)$ | $V_n^3(1,0,0)$ | 0,00610 |
| $N^3(1,0,1)$ | $V_n^3(1,0,1)$ | 0,00390 |

(suite)

| Noeud | Probabilité | Valeur |
|---|---|---|
| $N^3(1,1,0)$ | $V_n^3(1,1,0)$ | 0,00550 |
| $N^3(1,1,1)$ | $V_n^3(1,1,1)$ | 0,00450 |

**Revendications**

1. Procédé de régulation d'émission mis en oeuvre par une station ayant au moins un paquet de données à émettre *via* un réseau de communication sans fil, au cours d'un tournoi comprenant un nombre maximal déterminé de tours de sélection au cours desquels des autorisations ou des interdictions d'émettre sont attribuées à une pluralité de stations, le procédé comprenant :

   - une étape (G20) d'obtention pour chaque tour de sélection du tournoi d'une valeur binaire (r(k)) représentative soit d'une autorisation d'émettre soit d'une interdiction d'émettre ;
   - une étape (G100) d'émission dudit paquet, ladite étape d'émission étant exécutée sous condition qu'au moins un critère relatif à au moins une valeur (r(k)) binaire obtenue soit vérifié ;

   le procédé étant **caractérisé en ce qu'**il comprend, préalablement à ladite étape (G20) d'obtention, une étape d'affectation (G10) à ladite station d'une valeur d'index (A), déterminée aléatoirement, représentative du comportement de la station au cours du tournoi ; la ou les valeurs binaires (r(k)) obtenues pour le tournoi étant fonction de ladite valeur d'index (A) et d'une classe (n) de paquets à laquelle appartient le paquet à émettre.

2. Procédé selon la revendication 1, dans lequel ladite valeur d'index (A) est déterminée par tirage d'une valeur d'une variable aléatoire prenant ses valeurs dans un intervalle de valeurs d'index commun ([0,1[) à toutes les classes de paquet.

3. Procédé selon la revendication 1 ou 2, comprenant une étape d'identification, parmi une liste de sous-intervalles de valeurs associée à ladite classe (n) de paquets, d'un sous-intervalle de valeurs dans lequel se trouve ladite valeur d'index (A) et à partir duquel la ou les valeurs binaires sont déterminées.

4. Procédé selon la revendication 3, dans lequel un niveau de priorité est affecté pour une période de temps donné à ladite classe de paquets, la liste de sous-intervalles de valeurs associée à ladite classe (n) étant fonction du niveau de priorité couramment affecté à ladite classe.

5. Procédé selon l'une quelconque des revendications 1 à 4, dans lequel:

   - une valeur d'index initiale A est affectée à ladite station pour un tournoi courant comprenant l'exécution d'au moins une dite étape d'obtention et étape d'émission,
   - une nouvelle valeur d'index A' est affectée à ladite station lors d'un tournoi suivant le tournoi courant, ladite nouvelle valeur A' étant déduite de la valeur d'index initiale A affectée à ladite station lors du tournoi courant, de sorte que les stations ayant à émettre un paquet appartenant à ladite classe émettent à tour de rôle.

6. Procédé selon la revendication 5, dans lequel, lorsque lors dudit tournoi courant une autre station a émis au moins un paquet sans qu'il y ait eu collision, ladite valeur d'index A' est déduite de ladite valeur d'index A comme suit:

$$A'=A+1-A_i \text{ si } A< A_i$$

$$A'=A-A_i \text{ si } A\geq A_i.$$

où l'intervalle $[A_i, A_{i+1}[$ est l'intervalle de valeurs d'index associé à ladite autre station.

**7.** Dispositif de régulation d'émission pour une station ayant au moins un paquet de données à émettre *via* un réseau de communication sans fil, au cours d'un tournoi comprenant un nombre maximal déterminé de tours de sélection au cours desquels des autorisations ou des interdictions d'émettre sont attribuées à une pluralité de stations, le dispositif comprenant,

- des moyens de détermination, pour chaque tour de sélection d'un tournoi, d'une valeur binaire (r(k)) représentative soit d'une autorisation d'émettre, soit d'une interdiction d'émettre,
- des moyens d'émission configurés pour émettre un paquet sous condition qu'au moins un critère relatif à au moins une valeur (r(k)) obtenue soit vérifié,

le dispositif étant **caractérisé en ce qu'**il comprend :

- des moyens d'affectation à ladite station d'une valeur d'index (A), déterminée aléatoirement, représentative du comportement de la station au cours d'un tournoi; lesdits moyens de détermination étant configurés pour déterminer la ou les valeurs binaires pour un tournoi, en fonction de la valeur d'index (A) affectée à la station pour le tournoi et d'une classe (n) de paquets à laquelle appartient le paquet à émettre.

**8.** Programme informatique comprenant des instructions logicielles pour la mise en oeuvre d'un procédé selon l'une des revendications 1 à 6 lorsque ledit programme est exécuté par un processeur de données.

**9.** Support d'enregistrement lisible par un processeur de données sur lequel est enregistré un programme comprenant des instructions de code de programme pour l'exécution des étapes d'un procédé selon l'une des revendications 1 à 6.

**Patentansprüche**

**1.** Verfahren zur Regelung des Sendens, das von einer Station, die wenigstens ein über ein drahtloses Kommunikationsnetz zu sendendes Datenpaket aufweist, im Verlaufe eines Turniers durchgeführt wird, das eine bestimmte maximale Anzahl von Auswahlrunden umfasst, in denen mehreren Stationen Sendeberechtigungen oder Sendeverbote erteilt werden, wobei das Verfahren umfasst:

- einen Schritt (G20) der Gewinnung, für jede Auswahlrunde des Turniers, eines binären Wertes (r(k)), der entweder für eine Sendeberechtigung oder für ein Sendeverbot repräsentativ ist;
- einen Schritt (G100) des Sendens des Pakets, wobei der Schritt des Sendens unter der Bedingung ausgeführt wird, dass wenigstens ein Kriterium, das sich auf wenigstens einen gewonnenen binären Wert (r(k)) bezieht, erfüllt ist;

wobei das Verfahren **dadurch gekennzeichnet ist, dass** es vor dem Schritt (G20) der Gewinnung einen Schritt der Zuweisung (G10) eines zufällig bestimmten Indexwertes (A) zu der Station umfasst, der für das Verhalten der Station im Verlaufe des Turniers repräsentativ ist; wobei der oder die für das Turnier gewonnenen binären Werte r(k)) von dem Indexwert (A) und von einer Klasse (n) von Paketen, der das zu sendende Paket angehört, abhängig sind.

**2.** Verfahren nach Anspruch 1, wobei der Indexwert (A) durch Ermitteln eines Wertes einer Zufallsvariablen bestimmt wird, die ihre Werte in einem Intervall von Indexwerten ([0, 1[) annimmt, das allen Paketklassen gemeinsam ist.

**3.** Verfahren nach Anspruch 1 oder 2, welches einen Schritt der Identifizierung, in einer der Klasse (n) von Paketen zugeordneten Liste von Teilintervallen von Werten, eines Teilintervalls von Werten umfasst, in welchem sich der Indexwert (A) befindet und ausgehend von dem der oder die binären Werte bestimmt werden.

**4.** Verfahren nach Anspruch 3, wobei eine Prioritätsebene für einen gegebenen Zeitraum der Klasse von Paketen zugewiesen wird, wobei die Liste von Teilintervallen von Werten, die der Klasse (n) zugeordnet ist, von der Prioritätsebene abhängig ist, die dieser Klasse gegenwärtig zugewiesen ist.

**5.** Verfahren nach einem der Ansprüche 1 bis 4, wobei:

- ein anfänglicher Indexwert A der Station für ein aktuelles Turnier zugewiesen wird, das die Ausführung wenigstens eines Schrittes der Gewinnung und eines Schrittes des Sendens umfasst;

- ein neuer Indexwert A' der Station bei einem auf das aktuelle Turnier folgenden Turnier zugewiesen wird, wobei der neue Wert A' aus dem anfänglichen Indexwert A, welcher der Station bei dem aktuellen Turnier zugewiesen wurde, derart abgeleitet wird, dass die Stationen, die ein der Klasse angehörendes Paket zu senden haben, abwechselnd senden.

6. Verfahren nach Anspruch 5, wobei, wenn während des aktuellen Turniers eine andere Station wenigstens ein Paket gesendet hat, ohne dass eine Kollision erfolgt ist, der Indexwert A' aus dem Indexwert A wie folgt abgeleitet wird:

$$A' = A+1-A_i, \text{ falls } A<A_i,$$

$$A' = A-A_i, \text{ falls } A \geq A_i,$$

wobei das Intervall $[A_i, A_{i+1}[$ das Intervall von Indexwerten ist, das der anderen Station zugeordnet ist.

7. Vorrichtung zur Regelung des Sendens für eine Station, die wenigstens ein über ein drahtloses Kommunikationsnetz zu sendendes Datenpaket aufweist, im Verlaufe eines Turniers, das eine bestimmte maximale Anzahl von Auswahlrunden umfasst, in denen mehreren Stationen Sendeberechtigungen oder Sendeverbote erteilt werden, wobei die Vorrichtung umfasst:

- Mittel zur Bestimmung, für jede Auswahlrunde eines Turniers, eines binären Wertes (r(k)), der entweder für eine Sendeberechtigung oder für ein Sendeverbot repräsentativ ist;
- Mittel zum Senden, die dafür ausgelegt sind, ein Paket unter der Bedingung zu senden, dass wenigstens ein Kriterium, das sich auf wenigstens einen gewonnenen Wert (r(k)) bezieht, erfüllt ist, wobei die Vorrichtung **dadurch gekennzeichnet ist,**

**dass** sie umfasst:

- Mittel zur Zuweisung eines zufällig bestimmten Indexwertes (A) zu der Station, der für das Verhalten der Station im Verlaufe eines Turniers repräsentativ ist; wobei die Mittel zur Bestimmung dafür ausgelegt sind, den oder die binären Werte für ein Turnier in Abhängigkeit von dem Indexwert (A), welcher der Station für das Turnier zugewiesen ist, und von einer Klasse (n) von Paketen, der das zu sendende Paket angehört, zu bestimmen.

8. Computerprogramm, welches Software-Anweisungen für die Durchführung eines Verfahrens nach einem der Ansprüche 1 bis 6, wenn das Programm von einem Datenprozessor ausgeführt wird, umfasst.

9. Aufzeichnungsmedium, das von einem Datenprozessor lesbar ist und auf dem ein Programm aufgezeichnet ist, das Programmcodeanweisungen für die Ausführung der Schritte eines Verfahrens nach einem der Ansprüche 1 bis 6 umfasst.

**Claims**

1. Method for regulating sending implemented by a station having at least one data packet to be sent *via* a wireless communication network in the course of a tournament comprising a determined maximum number of selection rounds in the course of which permissions or prohibitions to send are assigned to a plurality of stations, the method comprising:

- a step (G20) of obtaining, for each selection round of the tournament, a binary value (r(k)) representative either of a permission to send, or of a prohibition to send;
- a step (G100) of sending said packet, said sending step being executed on condition that at least one criterion relating to at least one binary value (r(k)) obtained is satisfied;

the method being **characterized in that** it comprises, prior to said obtaining step (G20), a step (G10) of assigning to said station a randomly determined index value (A) representative of the behavior of the station in the course of the tournament; the binary value or values (r((k)) obtained for the tournament being dependent on said index value (A) and on a packet class (n) to which the packet to be sent belongs.

2. Method according to Claim 1, in which said index value (A) is determined by drawing a value of a random variable taking its values in a common interval of index values ([0,1[) shared by all the packet classes.

3. Method according to Claim 1 or 2, comprising a step of identifying, from among a list of sub-intervals of values which is associated with said class (n) of packets, a sub-interval of values in which said index value (A) lies and on the basis of which the binary value or values are determined.

4. Method according to Claim 3, in which a priority level is assigned for a given time period to said class of packets, the list of sub-intervals of values which is associated with said class (n) being dependent on the priority level customarily assigned to said class.

5. Method according to any one of Claims 1 to 4, in which:

   - an initial index value A is assigned to said station for a current tournament comprising the execution of at least one said obtaining step and sending step,
   - a new index value A' is assigned to said station during a tournament following the current tournament, said new value A' being deduced from the inital index value A assigned to said station during the current tournament so that the stations having to send a packet belonging to said class send in turn.

6. Method according to Claim 5, in which, when during said current tournament another station has sent at least one packet without there having been any collision, said index value A' is deduced from said index value A as follows:

$$A'=A+1-A_i \text{ if } A< A_i$$

$$A'=A-A_i \text{ if } A\geq A_i$$

where the interval $[A_i, A_{i+1}[$ is the interval of index values which is associated with said other station.

7. Device for regulating sending for a station having at least one data packet to be sent *via* a wireless communication network in the course of a tournament comprising a determined maximum number of selection rounds in the course of which permissions or prohibitions to send are assigned to a plurality of stations, the device comprising

   - means for determining, for each selection round of a tournament, a binary value (r(k)) representative either of a permission to send, or of a prohibition to send,
   - sending means configured to send a packet on condition that at least one criterion relating to at least one value (r(k)) obtained is satisfied,

the device being **characterized in that** it comprises:

   - means for assigning to said station a randomly determined index value (A) representative of the behavior of the station in the course of a tournament; said determining means being configured to determine the binary value or values for a tournament as a function of the index value (A) assigned to the station for the tournament and of a packet class (n) to which the packet to be sent belongs.

8. Computer program comprising software instructions for the implementation of a method according to one of Claims 1 to 6 when said program is executed by a data processor.

9. Record carrier readable by a data processor on which is recorded a program comprising program code instructions for the execution of the steps of a method according to one of Claims 1 to 6.

**Fig. 1**

**Fig. 2**

Fig. 3

Fig. 4

$$N_n^0$$

$$N_n^1(0)$$ $$N_n^1(1)$$

$$N_n^2(0,0)$$ $$N_n^2(0,1)$$ $$N_n^2(1,0)$$ $$N_n^2(1,1)$$

$$N_n^3(0,0,0)$$ $$N_n^3(0,0,1)$$ $$N_n^2(0,1,0)$$ $$N_n^3(0,1,1)$$ $$N_n^3(1,0,0)$$ $$N_n^3(1,0,1)$$ $$N_n^3(1,1,0)$$ $$N_n^3(1,1,1)$$

## Fig. 5

**Fig. 6**

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- WO 2007051946 A

**Littérature non-brevet citée dans la description**

- wireless LAN medium access control (MAC) and physical layer (PHY) spécifications. *IEEE 802.11a-1999, IEEE 802.11b-1999, IEEE-802.11d-2001*
- **J. GALTIER.** *Analysis and optimization of MAC with constant size congestion window for WLAN*
- **Z. ABICHAR ; M. CHANG.** CONTI: Constant Time Contention Resolution for WLAN Access. *IFIP Networking,* 2005
- Analysis and optimization of mac with constant size congestion window for WLAN. **J. GALTIER.** Proceedings on the Third International Conference on Services and Networks communications. INRIA, Library of Congress, Août 2007